# FASCICULE DE BREVET EUROPEEN

(11) **EP 2 650 098 B1**
(45) Date de publication et mention de la délivrance du brevet: **10.10.2018**
(21) Numéro de dépôt: 13163389.3
(22) Date de dépôt: 11.04.2013
(51) Int. Cl.: F21S 41/20, F21S 43/20, B29C 45/00, B29D 11/00, F21V 3/04, B29L 11/00, B29C 45/16, B29L 31/30

(54) **Elément transparent pour dispositif d'éclairage et/ou de signalisation**
Transparente Element für Vorrichtung zur Beleuchtung und/oder Signalisierung
Transparent element for a lighting and/or signalling device

(30) Priorité: 11.04.2012 FR 1253287
(43) Date de publication de la demande: 16.10.2013
(73) Titulaire: VALEO VISION, 93012 Bobigny Cedex (FR)
(72) Inventeur: Bernard, Cyrille, 49370 La Pouëze (FR); Gosselin, François, 49000 Angers (FR)

(56) Documents cités:
- EP-A1- 0 632 228
- EP-A1- 0 738 578
- DE-A1- 4 417 404
- JP-A- 7 156 219
- US-A- 6 123 889

## Description

### Domaine technique

Le secteur technique de l'invention est, d'une façon générale, celui des éléments transparents qui ferment les dispositifs d'éclairage et/ou de signalisation, notamment les projecteurs avant ou arrière de véhicule automobile.

### Technique antérieure

Il est connu de réaliser un élément transparent à partir de deux couches de matériaux injectés dans un moule. Un tel élément présente une forme galbée de manière à suivre les contours de la carrosserie du véhicule qu'il équipe. La fabrication est alors réalisée selon deux étapes, une première étape étant dédiée au moulage d'une première couche transparente par laquelle un flux lumineux passe pour éclairer la route empruntée par le véhicule. La deuxième étape consiste en une injection de la deuxième couche sur une zone spécifique de la première couche préalablement moulée.

Le moule comprend ainsi une empreinte femelle qui délimite le galbe concave de l'élément transparent et dans laquelle est insérée successivement une première empreinte mâle définissant la première couche, puis une deuxième empreinte mâle délimitant la deuxième couche. Un tel procédé implique le changement de la première empreinte mâle pour disposer la deuxième empreinte mâle.

Cette phase de changement provoque un inconvénient majeur. En effet, pendant le temps nécessaire à la phase de changement d'empreintes mâles, la première couche de l'élément transparent refroidit et il se créé alors un retrait de la première couche par rapport à l'empreinte femelle. Un tel retrait se produit plus particulièrement dans un plan passant par le bord de la première couche en direction du bord opposé. Ce retrait est problématique car la deuxième empreinte mâle se trouve alors en interférence avec la première couche disposée dans l'empreinte femelle, ce qui génère des efforts mécaniques sur la première couche qui sont de nature à l'endommager, en créant par exemple des rayures.

Par ailleurs, ce retrait de la première couche permet au matériau de la deuxième couche de s'infiltrer dans des zones non souhaitées, ce qui se traduit par une mise au rebut de l'élément transparent une fois terminé.

Un des buts de la présente invention est donc de résoudre l'inconvénient décrit ci-dessus.

Selon un principe de l'invention, ce but est résolu principalement en maintenant le bord de la première couche dans l'empreinte femelle de manière à ce que celui-ci ne puisse pas s'écarter de cette empreinte femelle pendant la phase de changement d'empreinte mâle..

Il est ainsi connu de DE4417404 de ménager une languette périphérique continue issue perpendiculairement à la face interne de la première couche, c'est-à-dire la face en contact avec l'empreinte femelle, et à proximité du bord mais en retrait vers la zone centrale de la pièce.

L'élément transparent bicouche décrit dans ce document présente une face parfaitement plane et la deuxième couche est injectée sur la partie extérieure visible : le raccord de jonction entre la première et la deuxième couche est donc visible de l'extérieur et la face externe n'est pas d'une seule pièce continue. La languette périphérique permet l'emboitement de l'élément dans une rainure aménagée sur un boitier renfermant des sources lumineuses afin de constituer un dispositif d'éclairage.

On comprend bien que cette solution nécessite une quantité de matière non négligeable pour former la languette et qu'en outre elle est difficilement adaptable à des formes d'élément tridimensionnellement plus complexes, notamment non globalement planes, la languette étant alors susceptible de ne pas assurer un maintien efficace de la première couche dans l'empreinte femelle pendant la phase de retrait. Enfin, cette solution confère un aspect peu esthétique aux dispositifs de signalisation incorporant de tels éléments bicouche, alors qu'aujourd'hui l'aspect esthétique extérieur de ces dispositifs est devenu primordial.

L'invention vise donc à proposer une solution de fonction anti-retrait qui nécessite peu de matière supplémentaire tout en assurant une plus grande liberté de conception dans la forme de l'élément et qui procure un meilleur aspect esthétique.

### Résumé de l'invention :

A cet égard, l'invention a pour objet un élément au moins en partie transparent pour un dispositif d'éclairage et/ou de signalisation d'un véhicule, réalisé avec une première couche et au moins une deuxième couche, ledit élément comprenant une première portion dépourvue de la deuxième couche et une deuxième portion où la première couche et la deuxième couche se superposent, caractérisé en que l'élément comprend un premier moyen de blocage de la première couche et un deuxième moyen de blocage de la première couche disposés de part et d'autre de la première portion, le premier moyen de blocage prenant la forme d'au moins un crochet directement ménagé sur un bord périphérique de la première couche et le deuxième moyen de blocage est formé par au moins une déformation par bosselage de la deuxième portion.

Cette répartition des moyens de blocage est, par exemple, réalisée de part et d'autre d'un plan passant par la longueur de la première portion.

On comprend bien que cette combinaison de deux moyens de blocage de forme différente permet d'assurer le blocage du retrait quelle que soit la géométrie de la pièce, avec peu de matière additionnelle et permet en outre d'utiliser avantageusement ces moyens de blocage pour des fonctions additionnelles d'assemblage et de fixation.

Selon une première caractéristique, le premier moyen de blocage et le deuxième moyen de blocage sont issus de la première couche. En d'autres termes, c'est le matériau utilisé pour fabriquer la première couche qui forme également le premier et le deuxième moyen de blocage.

Au moins un des moyens de blocage est ménagé au niveau de la deuxième portion. Selon une réalisation de l'invention, les deux moyens de blocage sont formés au niveau de la deuxième portion. Cette dernière étant notamment opaque et au moins en partie cachée par un ou des éléments de carrosserie, on garantit ainsi que les formes particulières des moyens de blocage sont invisibles pour un utilisateur placé devant le dispositif d'éclairage et/ou de signalisation installé sur le véhicule.

Selon une réalisation de l'invention, l'élément au moins en partie transparent selon l'invention est une glace de fermeture d'un dispositif d'éclairage et/ou de signalisation. Le dispositif d'éclairage et/ou de signalisation peut, par exemple, être un projecteur. Selon un exemple de réalisation, la deuxième portion forme le pied de la glace de fermeture ; ce pied est la partie destinée à passer sous la carrosserie du véhicule sur lequel le dispositif d'éclairage et/ou de signalisation est destiné à être monté.

Selon un mode de réalisation, le premier moyen de blocage prend la forme d'au moins un crochet ménagé directement sur un bord périphérique de la première couche. Cette zone particulière de la première couche se prête facilement à la formation du crochet puisqu'il s'agit de l'extrémité de la première couche.

Selon une variante, le premier moyen de blocage est discontinu de manière à former une multiplicité de crochets le long du bord périphérique. Cette solution permet de former les crochets en des endroits discrets et limite la consommation de matière supplémentaire pour réaliser la fonction anti-retrait.

En outre, cette réalisation du premier moyen de blocage sous la forme d'un ou plusieurs crochets lui confère avantageusement une fonction additionnelle à la fonction anti-retrait, à savoir une fonction d'assemblage et de maintien par encliquetage pour le montage de l'élément sur un boitier d'un dispositif d'éclairage ou de signalisation.

Le premier moyen de blocage est formé par le ou les crochets et le deuxième moyen de blocage est formé par au moins une déformation par bosselage de la deuxième portion. Un tel bosselage est en outre apte à assurer un maintien mécanique d'une pièce positionnée sur l'élément transparent, notamment une pièce de carrosserie du véhicule équipé de l'élément selon l'invention. Le positionnement, la fixation et le maintien d'un dispositif d'éclairage comprenant l'élément selon l'invention est ainsi facilité.

Selon une réalisation de l'invention, le ou les crochets sont formés uniquement d'un côté de la première portion. Le premier moyen de blocage est ainsi formé uniquement sur un premier flanc longitudinal de l'élément alors que le deuxième moyen de blocage est formé uniquement sur un deuxième flanc longitudinal de l'élément, opposé au premier flanc longitudinal par rapport à la première portion transparente.

Le crochet délimite une gorge apte à recevoir une nervure ménagée sur un moule de fabrication de l'élément.

Selon une solution particulière, la première portion est centrale alors que la deuxième portion est à la périphérie de la première portion. C'est donc bien la portion centrale qui est apte à être traversée par les rayons émis par une source lumineuse embarquée dans le dispositif d'éclairage et/ou de signalisation. La deuxième portion est ainsi délimitée par une bande qui chemine le long du bord de la première couche.

On notera tout particulièrement que la première couche est transparente alors que la deuxième couche est opaque. Par transparente, on entend apte à être traversée par le faisceau lumineux généré par la source lumineuse sans altérer significativement ce dernier. Par opaque, on entend la faculté de rendre invisible à l'oeil humain les rayons qui sont émis par la source lumineuse en direction de la deuxième portion.

On notera encore que la première couche et la deuxième couche sont réalisées en un matériau synthétique. Il importe que le ou les matériaux employés pour les couches soient chimiquement compatibles, de manière à garantir un lien mécanique au niveau de la deuxième portion. Selon un exemple, la première couche et/ou la deuxième couche sont en polycarbonate. Elles peuvent également être en polyméthacrylate de méthyle. Enfin, l'une des couches peut être en polycarbonate alors que l'autre couche est en polyméthacrylate de méthyle.

Selon une réalisation de l'invention, l'élément au moins en partie transparent selon l'invention est une glace de fermeture d'un dispositif d'éclairage et/ou de signalisation. Le dispositif d'éclairage et/ou de signalisation peut, par exemple, être un projecteur.

L'invention vise également un dispositif d'éclairage et/ou de signalisation comprenant l'élément au moins en partie transparent selon l'invention.

L'invention vise également un moule de fabrication, par exemple d'un élément au moins en partie transparent destiné à intégrer un dispositif d'éclairage et/ou de signalisation d'un véhicule, comprenant une empreinte femelle et deux empreintes mâles, une première cavité étant formée entre l'empreinte femelle et une première empreinte mâle pour réaliser une première couche de l'élément transparent, une deuxième cavité étant formée entre la première couche préalablement formée et une deuxième empreinte mâle pour réaliser une deuxième couche de l'élément transparent, caractérisé en ce que l'empreinte femelle comprend au moins une première conformation et une deuxième conformation aptes à bloquer un retrait de la première couche de l'élément.

Dans un tel moule, au moins une des conformations comprend une nervure adjacente à une rainure, toutes deux formées dans un plan de fermeture de l'empreinte femelle.

Le moule selon l'invention peut être utilisé pour réaliser l'élément au moins en partie transparent selon l'invention.

Un tout premier avantage selon l'invention réside dans la possibilité de maintenir le bord de la première couche contre l'empreinte femelle, en une position qui garantit l'absence d'interférence mécanique entre la première couche et la deuxième empreinte mâle. Cette solution est avantageuse car elle est simple à mettre en oeuvre et ne génère pas de difficulté pour démouler l'élément selon l'invention quand le moulage est terminé.

### Brève description des figures :

D'autres caractéristiques, détails et avantages de l'invention ressortiront plus clairement à la lecture de la description donnée ci-après à titre indicatif en relation avec des dessins dans lesquels :
   - la figure 1 est une vue en perspective de face d'un élément selon l'invention,
   - la figure 2 est une vue en perspective coupée illustrant l'élément selon l'invention,
   - la figure 3 est une vue en perspective qui montre le détail des moyens de réalisation de la fonction anti-retrait équipant un élément selon l'invention, et
   - la figure 4 est une vue en coupe partielle d'un moule avec lequel peut être fabriqué l'élément selon l'invention.

Il faut noter que les figures exposent l'invention de manière détaillée pour mettre en oeuvre l'invention, lesdites figures pouvant bien entendu servir à mieux définir l'invention le cas échéant.

### Description détaillée de l'invention

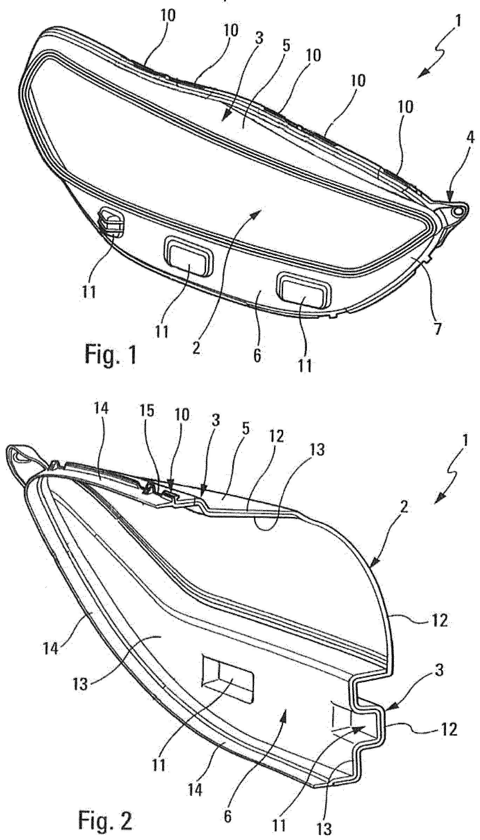

La figure 1 illustre un élément transparent 1 destiné à équiper un dispositif d'éclairage et/ou de signalisation pour un véhicule automobile. Il s'agit notamment d'un projecteur avant de véhicule, encore appelé phare. L'invention trouve aussi une application favorable dans un feu arrière pour véhicule automobile, et d'une manière générale dans tout dispositif destiné à émettre de la lumière.

Le dispositif d'éclairage et/ou de signalisation est constitué d'un boîtier arrière qui sert de support aux différents composants mécaniques, électriques et lumineux embarqués à l'intérieur du boîtier. Au moins une source de lumière génère un faisceau lumineux à projeter sur la route et cette source lumineuse est installée dans un volume interne du dispositif d'éclairage et/ou de signalisation délimité, d'un côté par le boîtier, et de l'autre par l'élément au moins en partie transparent, ci-après appelé élément transparent 1. Le faisceau lumineux sort donc du dispositif d'éclairage et/ou de signalisation en traversant l'élément transparent 1. Cet élément forme ainsi une glace de fermeture du projecteur avant.

La figure 1 montre cet élément transparent 1 dans une vue de face, c'est-à-dire en observant l'élément depuis l'extérieur du véhicule. Cette élément transparent comprend deux portions principales, dont une première portion 2 est transparente à la lumière émise par la source lumineuse et une deuxième portion 3 est rendue, par exemple, opaque. La première portion 2 est une portion centrale de l'élément transparent alors que la deuxième portion 3 est une bande périphérique qui entoure la première portion 2. En d'autres termes, la deuxième portion forme un flanc qui jouxte la portion central et qui entoure cette dernière.

La deuxième portion est rendue, par exemple, opaque de manière à cacher les composants installés dans le volume interne du dispositif d'éclairage et/ou de signalisation. Le caractère opaque, ou éventuellement colorisé, de la deuxième portion facilite également le mariage du dispositif d'éclairage et/ou de signalisation avec les éléments de carrosserie qui l'entoure.

La première portion 2 présente une forme allongée et se trouve ainsi entourée au dessus par un premier flanc longitudinal 5 constitutif de la deuxième portion 3. A l'opposé de ce premier flanc 5 par rapport à la première portion 2, on trouve un deuxième flanc longitudinale 6. Ces deux flancs longitudinaux 5 et 6 sont joints l'un à l'autre par un premier flan latéral 7 et un deuxième flanc latéral 8, installé à l'opposé du premier flanc latéral 7 par rapport à la première portion 2. L'élément transparent 1 comprend encore au moins un moyen de fixation 4 qui participe à la solidarisation du dispositif d'éclairage et/ou de signalisation sur le véhicule que le reçoit. Ce moyen de fixation 4 est, par exemple, installé à un angle entre un flanc longitudinal et un flanc latéral, plus particulièrement à l'angle situé entre le premier flanc longitudinal 5 et le premier flan latéral 7.

L'élément transparent 1 présente une fonction anti-retrait , appelée ainsi en ce sens que sa fonction principale est de contrecarrer le retrait de l'élément transparent 1 pendant le refroidissement de la première couche avant injection de la deuxième couche. Une telle fonction anti-retrait est obtenue par au moins un premier moyen de blocage 10 et au moins un deuxième moyen de blocage 11. De tels moyens de blocage assurent une retenue d'une première couche constitutive de l'élément transparent vis-à-vis de l'empreinte femelle d'un moule de fabrication de l'élément 1.

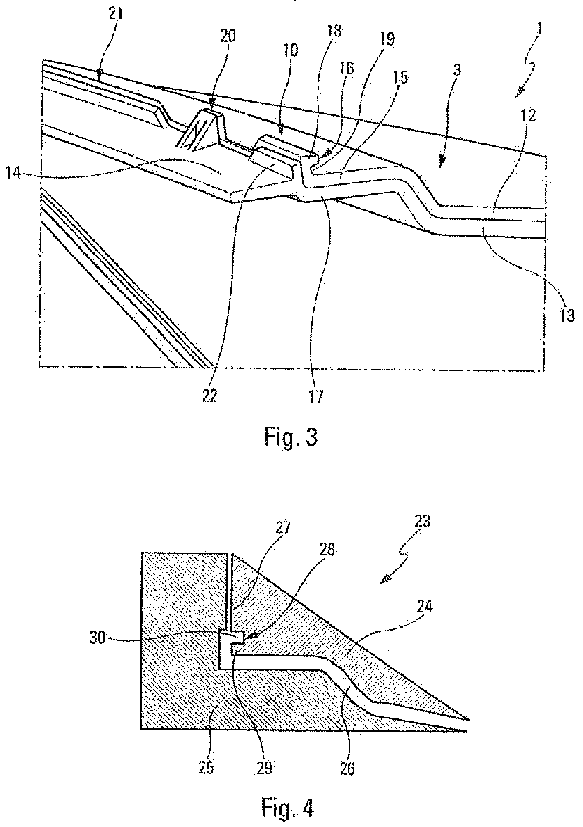

Selon une réalisation de l'invention, ce premier moyen de blocage 10 et ce deuxième moyen de blocage 11 sont respectivement ménagés de part et d'autre d'un plan, d'axe longitudinal, qui passe par la première portion 2. En référence au figures 1 et 2, le ou les premiers moyens de blocage 10 sont prévus sur le premier flanc longitudinal 5 alors que le ou les deuxièmes moyens de blocage 11 sont ménagés sur le deuxième flanc longitudinal 6. D'une manière générale, le premier moyen de blocage 10 et le deuxième moyen de blocage 11 sont disposés de part et d'autre de la première portion 2. Les formes spécifiques de ces moyens de blocage seront détaillées aux figures 2 et 3.

La figure 2 illustre la structure de l'élément transparent 1 selon l'invention. Ce dernier comprend une première couche 12 réalisée en un matériau transparent aux rayons émis par la source lumineuse installée dans le dispositif d'éclairage et/ou de signalisation, ainsi qu'une deuxième couche 13 réalisée en un matériau opaque, c'est-à-dire qui empêche le passage des rayons émis par la source lumineuse. Une telle opacité peut, par exemple, est réalisée au moyen d'une charge incorporée au matériau constitutif de la deuxième couche 13. Cette opacité peut également être obtenue par l'application d'une couche de peinture.

La première couche 12 forme la majeure partie de l'élément transparent 1 alors que la deuxième couche 13 est disposée en des zones particulières de cet élément. Ainsi, la première portion 2 est uniquement constituée de la première couche 12. Cette première portion est donc dépourvue de la deuxième couche, en raison du fait qu'il s'agit de la portion de l'élément transparent destinée à être traversée par les rayons de la source lumineuse. La deuxième portion 3 est quant à elle constituée d'une superposition de la première couche 12 et de la deuxième couche 13.

Dans cette deuxième portion 3, les deux couches sont liées mécaniquement l'une à l'autre chimiquement. Le matériau de la première couche 12 et le matériau de la deuxième couche 13 sont ainsi chimiquement compatibles de manière à se mélanger l'un à l'autre au moins sur une épaisseur superficielle de chacune des couches. De manière avantageuse, cette compatibilité est obtenue en employant des matériaux pour la première couche 12 et pour la deuxième couche 13 qui sont des matières synthétiques, notamment polymériques et éventuellement thermodurcissables.

A titre d'exemple, le matériau de la première couche est un polycarbonate. Un tel polycarbonate peut également être utilisé comme matériau pour la deuxième couche.

De manière alternative ou complémentaire, le matériau de la première couche est un polyméthacrylate de méthyle. Le matériau de la deuxième couche peut également être un polyméthacrylate de méthyle.

L'élément transparent comprend encore une bordure 14 réalisée uniquement par la deuxième couche 13. Une telle bordure 14 s'étend notamment dans le prolongement de la première couche, au niveau des flancs longitudinaux et latéraux.

Selon un exemple de réalisation préférée, le premier moyen de blocage 10 et le deuxième moyen de blocage 11 sont issus de la première couche 12. En d'autres termes, c'est le matériau constitutif de la première couche 12 qui est employé pour réaliser les formes particulières de ces moyens de blocage. On garantit ainsi que la tenue mécanique liée à la fonction anti-retrait est appliquée directement à la pièce que l'on souhaite maintenir en position dans l'empreinte du moule, c'est-à-dire la première couche.

On notera qu'au moins un des moyens de blocage est ménagé au niveau de la deuxième portion 3. Dans le cas exemplatif de la figure 2, il s'agit du deuxième moyen de blocage 11 qui est formé au niveau du deuxième flanc longitudinal 6, par une conformation ménagée à la fois dans la première couche 12 et dans la deuxième couche 13. De manière complémentaire, le premier moyen de blocage 10 est ménagé sur la deuxième portion 3, notamment au niveau du premier flanc longitudinal 5. A l'inverse du deuxième moyen de blocage, le premier moyen de blocage est uniquement formé par la première couche 12.

Le deuxième moyen de blocage 11 est une déformation par bosselage de la deuxième portion 3. Selon l'exemple de réalisation illustré aux figures 1 et 2, cette déformation par bosselage peut présenter une forme rectangulaire ou pyramidale qui débouche du deuxième flanc longitudinal 6 en direction de l'extérieur du véhicule, c'est-à-dire selon une direction sensiblement identique à un axe optique du faisceau lumineux qui sort du dispositif d'éclairage et/ou de signalisation. Autrement dit, le deuxième moyen de blocage prend la forme d'une protubérance creuse obtenue par bosselage, ladite protubérance étant saillante du côté opposé au côté de la première couche sur lequel la deuxième couche est appliquée.

L'élément transparent 1 peut comprendre une seule et unique déformation par bosselage. Selon l'exemple illustré, on constate que l'élément transparent comprend un deuxième moyen de blocage 11 constitué de trois déformations par bosselage distinctes, réparties sur la longueur du deuxième flanc longitudinal 6.

Le deuxième moyen de blocage participe à la fonction d'anti-retrait et présente en outre au moins une fonction supplémentaire. En effet, la déformation est apte à assurer un maintien mécanique d'une pièce positionnée sur l'élément transparent 1. Autrement dit, cette déformation permet de positionner une pièce de manière à l'aligner sur l'élément transparent 1. Cette pièce est, par exemple, un élément de la carrosserie du véhicule sur lequel l'élément transparent est monté. De manière plus précise, il s'agit notamment d'une calandre ou d'un pare-choc, par exemple avant.

Au moins un des moyens de blocage prend la forme d'au moins un crochet ménagé sur un bord périphérique 15 de la première couche 12, un tel bord périphérique étant la bande où se termine la première couche 12. Dans le cas présent, il s'agit du premier moyen de blocage 10 formé au niveau du premier flanc longitudinal 5. Le premier moyen de blocage 10 est directement ménagé sur le bord périphérique.

Selon un exemple de réalisation, le premier moyen de blocage 10 est continu et unique le long de ce bord périphérique 15, sur au moins une partie de la longueur du premier flanc longitudinal 5. De manière alternative, le premier moyen de blocage 10 est discontinu le long du bord périphérique 15, ce qui, en pratique, permet de former une multiplicité de crochets le long de ce bord périphérique.

La figure 3 montre en détails le premier moyen de blocage 10. La superposition de la première couche 12 avec la deuxième couche 13 au niveau de la deuxième portion 3 est particulièrement apparente, et on constate que la bordure 14 réalisée avec la deuxième couche 13 s'étend en formant un biseau, de manière à s'insérer dans une forme complémentaire réalisée sur le boîtier du dispositif d'éclairage et/ou de signalisation.

Le premier moyen de blocage 10 forme un crochet 16 au moyen d'un fond de crochet 17 qui s'étend dans un plan perpendiculaire, ou sensiblement perpendiculaire, au plan dans lequel s'étend le bord périphérique 15. Un retour 18 prend naissance sur le fond de crochet 17 et s'étend dans un plan perpendiculaire, ou sensiblement perpendiculaire, au plan d'extension du fond de crochet 17. Ainsi, le retour 18 s'étend dans un plan parallèle, ou sensiblement parallèle, au plan d'extension du bord périphérique 15. Une telle structure permet de délimiter une gorge 19 qui participe à la fonction d'anti-retrait car elle reçoit une nervure qui est ménagée sur l'empreinte femelle du moule de fabrication de l'élément transparent 1.

Le long du bord périphérique 15, on constate la présence d'excroissances référencées 20 et 21, de telles excroissances ayant pour fonction de renforcer la tenue mécanique entre la première couche 12 et la deuxième couche 13, au niveau du bord périphérique 15. Ces excroissances 20 et 21 sont constituées de la première couche 12 et de la deuxième couche 13 et débouchent du bord périphérique 15, selon une direction sensiblement perpendiculaire. On constate enfin que la deuxième couche 13 comprend une tranche 22 qui est positionnée contre le fond de crochet 17, ce qui permet d'augmenter la tenue mécanique entre la première couche 12 et la deuxième couche 13, au niveau du bord périphérique 15, en mettant à profit l'existence du crochet.

La figure 4 illustre un outil de fabrication, par exemple, d'un élément transparent selon l'invention. Il s'agit ici d'un moule 23 représenté en coupe selon un plan passant par le premier moyen de blocage de l'élément transparent.

Un tel moule 23 comprend une empreinte femelle 24, une première empreinte mâle 25 et une deuxième empreinte mâle (non représenté). Une première cavité 26 est ménagée entre la première empreinte mâle 25 et l'empreinte femelle 24 et cette première cavité est remplie par le matériau transparent constitutif de la première couche. Postérieurement à la formation de la première couche, il est réalisé une deuxième cavité (non représentée) formée entre la première couche préalablement formée et la deuxième empreinte mâle. On injecte alors le matériau opaque constitutif de la deuxième couche contre la première couche, de manière à ce que ces couches se superposent et lient chimiquement l'une à l'autre.

L'empreinte femelle 24 comprend un plan de fermeture 27 du moule, ce plan participant d'un côté à la délimitation de la première cavité 26, et de l'autre étant en contact contre la première empreinte mâle 25. Ce plan de fermeture 27 entoure l'élément transparent à mouler et comprend au moins une première conformation 28 et une deuxième conformation aptes à bloquer un retrait de l'élément transparent, notamment de la première couche de l'élément transparent. La première conformation 28 et la deuxième conformation sont ménagées de part et d'autre d'une zone du moule ou seule la première couche est présente, notamment de part et d'autre d'un plan horizontal passant par cette zone.

La première conformation 28 présente une forme complémentaire au crochet 16 détaillé à la figure 3. La deuxième conformation, bien que non représentée, présente une forme complémentaire à une déformation mettant en oeuvre le deuxième moyen de blocage 11, montrée sur la figure 2.

La première conformation 28 et/ou la deuxième conformation comprennent une nervure 29 adjacente à une rainure 30, toutes deux formées dans le plan de fermeture 27. La rainure 30 permet de former le retour 18 du crochet 16, alors que la nervure 29 délimite le fond de crochet 17 du premier moyen de blocage.

Une fois que la première couche se solidifie dans la première cavité 26, un maintien mécanique s'opère entre cette première couche et l'empreinte femelle 24 de part et d'autre de la première portion de l'élément transparent. Un déplacement de la première couche selon une direction parallèle au fond de crochet est alors interdit et l'insertion de la deuxième empreinte mâle ne risque pas d'endommager la première couche.

### Application industrielle

L'élément selon l'invention entre dans la constitution de dispositif d'éclairage et/ou de signalisation de véhicules automobiles.

## Revendications

1. Elément (1) au moins en partie transparent, pour un dispositif d'éclairage et/ou de signalisation d'un véhicule, réalisé avec une première couche (12) et au moins une deuxième couche (13), ledit élément (1) comprenant une première portion (2) dépourvue de la deuxième couche (13) et une deuxième portion (3) où la première couche (12) et la deuxième couche (13) se superposent, l'élément (1) comprenant un premier moyen de blocage (10) de la première couche (12) et un deuxième moyen de blocage (11) de la première couche (12) disposés de part et d'autre de la première portion (2),
**caractérisé en ce que** le premier moyen de blocage (10) prend la forme d'au moins un crochet (16) directement ménagé sur un bord périphérique (15) de la première couche (12) et **en ce que** deuxième moyen de blocage (11) est formé par une déformation par bosselage de la deuxième portion (3).

2. Elément selon la revendication 1, le premier moyen de blocage (10) et le deuxième moyen de blocage (11) sont issus de la première couche (12).

3. Elément selon l'une quelconque des revendications précédentes, dans lequel le premier moyen de blocage (10) est discontinu de manière à former une multiplicité de crochets (16) le long du bord périphérique (15).

4. Elément selon l'une quelconque des revendications précédentes, dans lequel le au moins un crochet (16) est formé uniquement d'un côté de la première portion (2).

5. Elément selon l'une quelconque des revendications précédentes, dans lequel le crochet (16) délimite une gorge (19) apte à recevoir une nervure (29) ménagée sur un moule de fabrication de l'élément (1).

6. Elément selon l'une quelconque des revendications précédentes, dans lequel la première portion (2) est centrale alors que la deuxième portion (3) est à la périphérie de la première portion (2).

7. Elément selon l'une quelconque des revendications précédentes, dans lequel la première couche (12) est transparente alors que la deuxième couche (13) est opaque.

8. Elément selon l'une quelconque des revendications précédentes, dans lequel la première couche (12) et la deuxième couche (13) sont réalisées en un matériau synthétique.

9. Elément selon l'une quelconque des revendications précédentes, dans lequel la première couche (12) et/ou la deuxième couche (13) sont en polycarbonate.

10. Elément selon l'une quelconque des revendications précédentes, dans lequel au moins la première couche (12) et/ou la deuxième couche (13) sont en polyméthacrylate de méthyle.

11. Dispositif d'éclairage et/ou de signalisation comprenant un élément au moins en partie transparent selon l'une des revendications précédentes.

## Patentansprüche

1. Elemente (1), das zumindest teilweise transparent ist, für eine Beleuchtungs- und/oder Anzeigevorrichtung eines Fahrzeugs, das mit einer ersten Schicht (12) und mindestens einer zweiten Schicht (13) ausgeführt ist, wobei das Element (1) einen ersten Abschnitt (2) ohne die zweite Schicht (13) und einen zweiten Abschnitt (3) umfasst, in dem sich die erste Schicht (12) und die zweite Schicht (13) überlagern, wobei das Element (1) ein erstes Feststellungsmittel (10) der ersten Schicht (12) und ein zweites Feststellungsmittel (11) der ersten Schicht (12) umfasst, die beiderseits des ersten Abschnitts (2) angeordnet sind, **dadurch gekennzeichnet, dass** das erste Feststellungsmittel (10) die Form mindestens eines Hakens (16) annimmt, der direkt auf einem Umfangsrand (15) der ersten Schicht (12) vorgesehen ist, und dass das zweite Feststellungsmittel (11) von einer Verformung durch Erhebung des zweiten Abschnitts (3) gebildet ist.

2. Element nach Anspruch 1, das erste Feststellungsmittel (10) und das zweite Feststellungsmittel (11) aus der ersten Schicht (12) hervorgehen.

3. Element nach einem der vorhergehenden Ansprüche, bei dem das erste Feststellungsmittel (10) nicht durchgehend ist, um eine Vielzahl von Haken (16) entlang des Umfangsrandes (15) zu bilden.

4. Element nach einem der vorhergehenden Ansprüche, bei dem der mindestens eine Haken (16) nur auf einer Seite des ersten Abschnitts (2) ausgebildet ist.

5. Element nach einem der vorhergehenden Ansprüche, bei dem der Haken (16) eine Nut (19) begrenzt, die geeignet ist, eine Rippe (29), die auf einer Form zur Herstellung des Elements (1) vorgesehen ist, aufzunehmen.

6. Element nach einem der vorhergehenden Ansprüche, bei dem der erste Abschnitt (2) zentral ist, während der zweite Abschnitt (3) an der Peripherie des ersten Abschnitts (2) angeordnet ist.

7. Element nach einem der vorhergehenden Ansprüche, bei dem die erste Schicht (12) transparent ist, während die zweite Schicht (13) opak ist.

8. Element nach einem der vorhergehenden Ansprüche, bei dem die erste Schicht (12) und die zweite Schicht (13) aus einem synthetischen Material hergestellt sind.

9. Element nach einem der vorhergehenden Ansprüche, bei dem die erste Schicht (12) und/oder die zweite Schicht (13) aus Polykarbonat sind.

10. Element nach einem der vorhergehenden Ansprüche, bei dem mindestens die erste Schicht (12) und/oder die zweite Schicht (13) aus Methylpolymethacrylat sind.

11. Beleuchtungs- und/oder Anzeigevorrichtung, umfassend ein zumindest teilweise transparentes Element nach einem der vorhergehenden Ansprüche.

## Claims

1. At least partially transparent element (1) for a lighting and/or signalling device of a vehicle, produced with a first layer (12) and at least one second layer (13), said element (1) comprising a first portion (2) without the second layer (13) and a second portion (3) in which the first layer (12) and the second layer (13) are superposed, the element (1) comprising a first locking means (10) for the first layer (12) and a second locking means (11) for the first layer (12) that are disposed on either side of the first portion (2), **characterized in that** the first locking means (10) is in the form of at least one clip (16) formed directly on a peripheral edge (15) of the first layer (12), and **in that** the second locking means (11) is formed by a deformation by embossing the second portion (3).

2. Element according to Claim 1, the first locking means (10) and the second locking means (11) are part of the first layer (12).

3. Element according to either one of the preceding claims, wherein the first locking means (10) is discontinuous so as to form a multiplicity of clips (16) along the peripheral edge (15).

4. Element according to any one of the preceding claims, wherein the at least one clip (16) is formed only on one side of the first portion (2).

5. Element according to any one of the preceding claims, wherein the clip (16) delimits a groove (19) that is able to receive a rib (29) formed on a mould for manufacturing the element (1).

6. Element according to any one of the preceding claims, wherein the first portion (2) is central while the second portion (3) is at the periphery of the first portion (2).

7. Element according to any one of the preceding claims, wherein the first layer (12) is transparent while the second layer (13) is opaque.

8. Element according to any one of the preceding claims, wherein the first layer (12) and the second layer (13) are produced from a plastics material.

9. Element according to any one of the preceding claims, wherein the first layer (12) and/or the second layer (13) are made of polycarbonate.

10. Element according to any one of the preceding claims, wherein at least the first layer (12) and/or the second layer (13) are made of polymethyl methacrylate.

11. Lighting and/or signalling device comprising an at least partially transparent element according to one of the preceding claims.
